# EUROPEAN PATENT APPLICATION

(11) **EP 4 722 985 A1**
(43) Date of publication of application: **08.04.2026**
(21) Application number: 25205933.2
(22) Date of filing: 01.10.2025
(51) Int. Cl.: G06N 3/0495, G06N 3/084, G06N 3/096, G06N 3/098, G06N 20/00

(54) **DISTRIBUTED TRAINING OF COMPRESSED MACHINE LEARNING MODELS**

(30) Priority: 07.10.2024 US 202418908601
(71) Applicant: VMware LLC, Palo Alto, CA 94304 (US)
(72) Inventor: Ben-Izhak, Yaniv, Pardes Hanna-Karkur (IL); Vargaftik, Shay, Haifa (IL)
(74) Representative: Grünecker Patent- und Rechtsanwälte PartG mbB

(57) **Abstract**

An example apparatus includes a hardware platform having arithmetic circuits and a memory, the memory configured to store, at a first precision, first compressed parameters of a machine learning (ML) model; a network interface controller; and a controller, supported by the hardware platform, configured to: decompress, from the memory through an increase in precision to a second precision, the first compressed parameters to obtain decompressed parameters; control the arithmetic circuits to train, using arithmetic operations, the ML model and update the decompressed parameters; compress, using quantization and reduction in precision to the first precision, the decompressed parameters as updated to obtain second compressed parameters; send, using the network interface controller, the second compressed parameters over a network to a server; and update the first compressed parameters in the memory in response to data received, through the network interface controller, from the server over the network.

## Description

### BACKGROUND

Machine learning may refer to a subset of artificial intelligence that enables computing devices to learn from data, and make predictions or decisions from the data, without being explicitly programmed to perform specific tasks. A machine learning (ML) model may be a set of one or more algorithms having parameters trained on data to produce estimates about data patterns. Parameters of an ML model may be the internal variables used by the algorithm(s). The generated estimates from an ML model can be used for various purposes, such as to make predictions, to make classifications, and the like. In machine learning, training may be a process of supplying training data as input to the ML model, evaluating the resulting estimates, and adjusting the parameters. The parameters can capture the relationships and patterns in the training data and can be used to make predictions or decisions on new data. For example, in a linear regression model, the parameters can be coefficients of a linear equation. In a neural network model, the parameters can be weights and biases of network neurons.

There can be different paradigms of machine learning, such as unsupervised learning, supervised learning, self-supervised learning, to name a few. The type of training can depend on the paradigm used. For example, in supervised learning, the training data can include both data for input to the model and desired output results (sometimes referred to as labeled training data). Labeled training data may be training data where items of input data are paired with expected results (e.g., the input data items include labels). In unsupervised learning, the training data can be unlabeled (e.g., items of input data are not paired with expected results). In self-supervised learning, the training data can omit external labels, but algorithm(s) of the ML model can be used to derive labels from relationships in the input data.

Distributed and federated learning can be two approaches to training ML models across multiple clients. Distributed learning may be a process where training of an ML model is spread over multiple clients. A central source (e.g., the server) can divide the training data among the clients (data parallelism), divide the ML model into partitions among clients (model parallelism), or both. The clients can return training results back to the central source. Federated learning may be a form of distributed learning where the clients perform training using local training data. The local training data can be unknown to the central source (e.g., kept secure from the central source).

Implementation of a distributed learning environment (including a federated learning environment) can include challenges in data transmission. The environment can include multiple client devices in communication with a server over a network. The client devices can send training results to the server, which can be large data sets. The amount of data that needs to be sent from the client devices to the server can consume significant resources, such as resources of the client devices, resources of the network, resources of the server, and the like.

### SUMMARY

In an embodiment, an apparatus can include a hardware platform having arithmetic circuits and a memory, the memory configured to store first compressed parameters of a machine learning (ML) model. The apparatus can include a network interface controller. The apparatus can include a controller, supported by the hardware platform, configured to: decompress, from the memory, the first compressed parameters to obtain decompressed parameters; control the arithmetic circuits to train, using arithmetic operations, the ML model and update the decompressed parameters; compress the decompressed parameters as updated to obtain second compressed parameters; send, using the network interface controller, the second compressed parameters over a network to a server; and update the first compressed parameters in the memory in response to data received, through the network interface controller, from the server over the network.

In another embodiment, a method of calibrating a machine learning (ML) model is described. The method can include decompressing, from a memory of a hardware platform in a client device, first compressed parameters of the ML model to obtained decompressed parameters. The method can include controlling arithmetic circuits of the hardware platform to train, using arithmetic operations, the ML model and update the decompressed parameters. The method can include compressing the decompressed parameters as updated to obtain second compressed parameters. The method can include sending, using a network interface controller of the client device, the second compressed parameters to a server over a network. The method can include updating the first compressed parameters in the memory in response to data received, through the network interface controller, from the server over the network.

In another embodiment, a distributed learning apparatus is described. The distributed learning apparatus can include a client device and a server coupled to the client device through a network. The client device can include a hardware platform having arithmetic circuits and a memory, the memory configured to store first compressed parameters of a machine learning (ML) model. The client device can include a network interface controller. The client device can include a controller, supported by the hardware platform, configured to: decompress, from the memory, the first compressed parameters to obtain decompressed parameters; control the arithmetic circuits to train, using arithmetic operations, the ML model and update the decompressed parameters; compress the decompressed parameters as updated to obtain second compressed parameters; send, using the network interface controller, the second compressed parameters over the network to the server; and update the first compressed parameters in the memory in response to data received, through the network interface controller, from the server over the network.

### BRIEF DESCRIPTION OF THE DRAWINGS

Fig. 1 is a block diagram depicting a communication system according to some embodiments.
Fig. 2 is a block diagram depicting a computer according to some embodiments.
Fig. 3 is a block diagram depicting training of a local ML model in a distributed learning environment according to embodiments.
Fig. 4 is a block diagram depicting a client device according to some embodiments.
Fig. 5 is a block diagram depicting training of a decompressed ML model and update of a compressed ML model according to some embodiments.
Fig. 6 is a block diagram depicting a server according to some embodiments.
Fig. 7 is a flow diagram depicting a method of training an ML model in a distributed learning environment according to some embodiments.
Fig. 8 is a flow diagram depicting a method of training a local ML model at a client device according to some embodiments.
Fig. 9 is a flow diagram depicting a method of training a compressed ML model at a client device according to some embodiments.
Fig. 10 is a flow diagram depicting a method of updating a global ML model at a server according to some embodiments.

### DETAILED DESCRIPTION

A data communication system can include a client device coupled to a server device (server) through a network. The client device and server can be computers. The client device can include a hardware platform having arithmetic circuits and a memory. The client device can include a network interface controller to connect the client device to the network and communicate with the server. In some embodiments, the data communication system can implement a distributed learning system. The client device can implement a machine learning model, which can be a local machine learning model. The server can collect data from the client device and other client devices to implement a global machine learning model. Performance of the data communication system can be measured using various performance metrics. One technical problem for a data communication system is the consumption of resources, including consumption of memory and the consumption of bandwidth of the network interface controller. Such memory and bandwidth can be limited resources under contention in the system. Consuming more of either or both by one application can come at the expense of another application. Techniques are described herein for implementing a distributed learning system using a data communication system that consumes less memory and less bandwidth of the network interface controller. In some embodiments, the local machine learning model can be stored at the client device using compressed parameters that have a first precision. The first precision can be reduced with respect to a second precision, for example, of the arithmetic circuits. Reducing precision of the parameters results in storing less bits in the memory and consuming less of the limited memory resource. Further, during training, the techniques described herein decompress the compressed parameters by increasing the precision thereof to the second precision. This allows the local machine learning model to be trained with sufficient accuracy. The techniques then compress, using quantization and reduction in precision, the decompressed model parameters before transmission to the server through the network interface controller. Quantizing and reducing the precision of the parameters results in less bits to be transmitted by the network interface controller and consuming less of its bandwidth (as well as bandwidth of the network). The savings in memory consumption and bandwidth consumption can be utilized by other applications in the data communication system. Even without the presence of other applications, transmitting less bits from the client to the server improves the performance of the network interface controller, including a reduction in power consumption (e.g., the network interface controller can be activated for transmission for less time). These and further aspects of the techniques are described below with respect to the drawings.

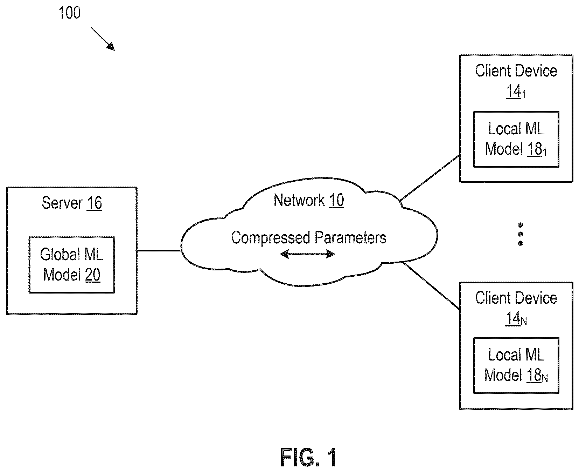

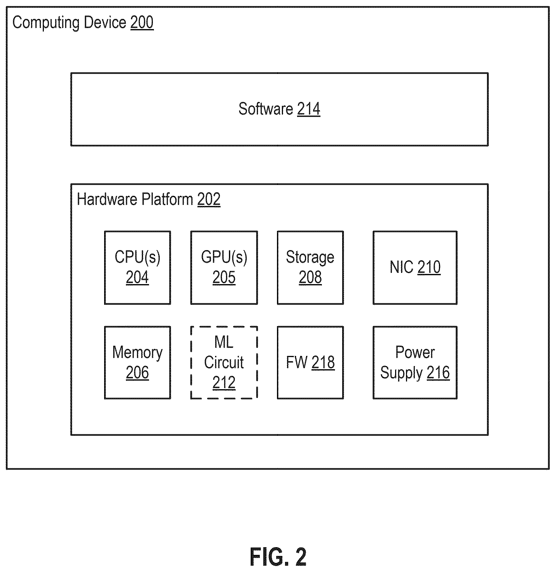

Fig. 1 is a block diagram depicting a communication system 100 according to some embodiments. Communication system 100 includes client devices 14₁...14_{N} (where N is an integer greater than zero) in communication with a server 16 through a computer network 10 (shown as network 10). A server may be a computer configured to provide one or more services to clients. A computer may be a machine that can be programmed to perform operations. While a server may execute software, unless otherwise indicated herein, a server is not itself a software component. A client device may be a computer. An example computer is shown in Fig. 2 and described below. A computer network (also referred to herein as a network) may be devices connected by network nodes for communication with one another. A network node may be a connection point in the network. Example network nodes include network switches, network hubs, network bridges, network routers, wireless access points, and the like (not specifically shown). Server 16 can provide services client devices 14₁...14_{N} over network 10, which can include the exchange of data over network 10 as discussed further herein.

In some embodiments, server 16 and client devices 14₁...14_{N} may implement distributed learning. In this context, server 16 can implement a global ML model 20 and each client device 14ₖ can implement a local ML model 18ₖ (k ∈ {1, 2, ..., N}). A local ML model may be an instance of an ML model stored and adjusted at a client in a distributed learning environment. A global ML model may be an instance of an ML model stored and adjusted at a central source. Each client device 14ₖ can store and adjust parameters of local ML model 18ₖ. Each client device 14ₖ can send parameters of local ML model 18ₖ to server 16 through network 10. In some embodiments, client devices 14₁...14_{N} can send parameters to server 16 in compressed form (referred to as compressed parameters). Compressing the parameters can conserve resources, such as power and network bandwidth at the clients, the network, and the server. Parameter compression is discussed further below. Server 16 can store and adjust parameters of global ML model 20 in response to compressed parameters received from clients 14₁...14_{N}.

A client device can adjust parameters of its local ML model through training (e.g., supervised, unsupervised, self-supervised, etc.). In some embodiments, client devices 14₁...14_{N} can receive training data from server 16. In other embodiments, such as when the distributed learning environment is a federated learning environment, client devices 14₁...14_{N} can generate or obtain training data locally (e.g., training data unknown to server 16). In still other embodiments, a combination of training data from server 16 and training data obtained or generated locally can be used for local ML model training. In some embodiments, a client device can start with an untrained local ML model. In other embodiments, server 16 can provide a client with a trained ML model as a seed for its local ML model. In some embodiments, client devices 14₁...14_{N} can perform a type of training known as calibration. Calibration in machine learning can be training that adjusts an ML model's predicted probabilities (e.g., to better reflect the true likelihood of an event or outcome). Calibration can use a smaller data set for training than that used to train an untrained ML model.

Server 16 can collect compressed parameters from client devices 14₁...14_{N}. Server 16 can aggregate the sets of compressed parameters to generate a set of aggregated parameters. The aggregated parameters can be the parameters of global ML model 20. Aggregation can include, for example, averaging of the sets of compressed parameters. Server 16 can update local ML models 18₁...18_{N} by sending the aggregated parameters to client devices 14ₗ...14_{N}. In some embodiments, server 16 can send the aggregated parameters to client devices 14ₗ...14_{N} in compressed form.

Fig. 2 is a block diagram depicting a computer 200 according to some embodiments. Each of server 16 and client devices 14ₗ...14_{N} can be implemented using computer 200 or a variation thereof. Computer 200 can include software 214 executing on a hardware platform 202. Hardware platform 202 can include conventional components of a computing device, such as one or more central processing units (CPUs) 204, graphic processing units (GPUs) 205, memory 206 (e.g., random access memory (RAM)), one or more network interface controllers (NICs) 210, storage devices ("storage 208"), firmware (FW) 218, and a power supply 218. A CPU may be a circuit that can interpret and execute instructions, and manipulate data, of software. Software may be instructions and data used to operate a computer. A GPU may be a circuit, similar to CPU, but specialized for parallel processing of data. A memory may be a circuit or circuits that store information. Memory 206 can include volatile memory, non-volatile memory, or a combination thereof. Volatile memory may be any type of memory circuit that requires power to maintain the stored information (e.g., random access memory (RAM)). Non-volatile memory may be any type of memory circuit that retains data even when the power is turned off or disconnected (e.g., read-only memory (ROM), erasable programmable ROM (EPROM), FLASH memory, etc.). Firmware may be a type of software that is embedded in device(s) of hardware platform 202. A storage device may be a device that stores data persistently. Storage devices can include non-volatile storage, such as magnetic disks (e.g., hard drives), solid-state storage (e.g., solid-state disks (SSDs), NVMe devices, etc.), and the like as well as combinations thereof. A NIC may be a circuit that interfaces with a network. A power supply may be a circuit that supplies power to devices of hardware platform 202.

CPUs 204 are configured to execute instructions, for example, executable instructions that perform one or more operations described herein, which may be stored in memory 206. NICs 210 enable computer 200 to communicate with other devices using network protocols (e.g., Ethernet, Transmission Control Protocol/Internet Protocol (TCP/IP), etc.). NIC(s) 210 can be connected to network 10. Storage 208 can include magnetic disks, solid-state disks, flash memory, and the like as well as combinations thereof. Power supply 216 can include circuits that provide power to CPUs 204, GPUs 205, memory 206, storage 208, NIC 210, and ML circuit 212. In some embodiments, hardware platform 202 can include an ML circuit 212. ML circuit 212 can include digital logic circuits (e.g., logic gates, multiplexers, flip-flops, etc.) configured to perform ML operations, such as those used to implement an ML model. Software 214 can include an operating system (OS). The OS can be any commodity OS or hypervisor known in the art. Software 214 can further include ML software configured to perform ML operations, such as those used to implement an ML model.

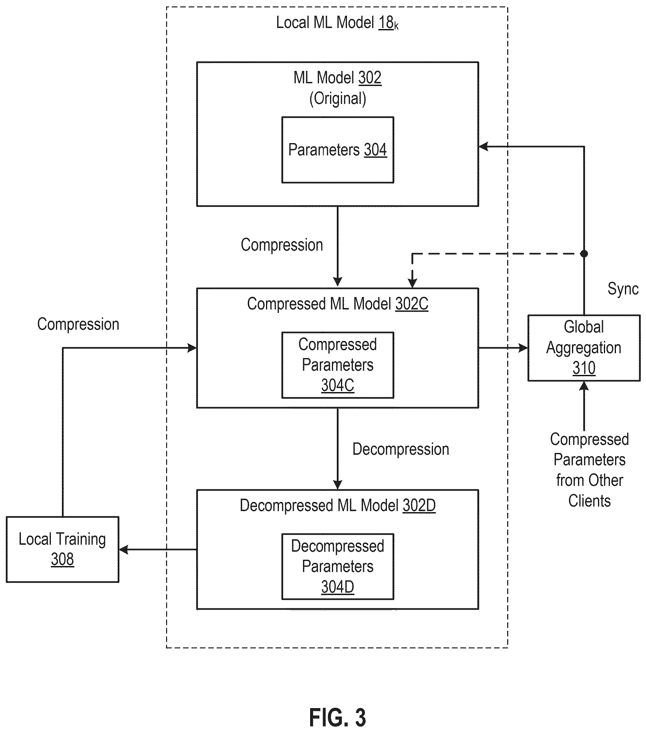

Fig. 3 is a block diagram depicting training of a local ML model 18ₖ in a distributed learning environment according to embodiments. An ML model 302 can include parameters 304. Initially, ML model 302 can be consistent between server 16 and a client device 14ₖ. That is, global ML model 20 and local ML model 18ₖ can be synchronized (e.g., the parameters are the same). Client device 14ₖ can compress ML model 302 to generate compressed ML model 302C. Compressed model 302C can include compressed parameters 304C. After compression, client device 14ₖ can store compressed ML model 302C in its memory rather than ML model 302. ML model 302 can be referred to as the original ML model. Compression may be a reduction in bits of storage. Precision of a parameter can be the number of bits of the parameter. Each parameter 304 can be stored in memory at a second precision. Each compressed parameter 304C can be stored in memory at a first precision less than the second precision. When compressing a parameter, the value of the parameter can be quantized. Quantization can be a process of constraining an input to a discrete set of values. For a parameter of an ML mode, quantization can be the process or constraining the parameter having an initial value in a larger set of discrete values (parameter 304) to a quantized value in a smaller set of discrete values (compressed parameter 304C). That is, reducing the precision of a parameter can result in quantization of the value of the parameter.

The compression of parameters 304 to generate compressed parameters 304C can use different types of quantization. Quantization can be uniform or non-uniform. Uniform quantization may be where the set of discrete values is divided into equal intervals. Non-uniform quantization may be where the set of discrete values is divided into unequal intervals. Example uniform quantization techniques include linear quantization, affine quantization, symmetric quantization, asymmetric quantization, fixed-point quantization, stochastic quantization, and the like. Example non-uniform quantization techniques include logarithmic quantization, k-means quantization, piecewise uniform quantization, and the like.

Compressed ML model 302C can occupy a reduced footprint in memory as compared to ML model 302 since less bits are used per parameter (e.g., compressed parameters 304C consume less memory than parameters 304). As discussed further below, in some cases, the precision of compressed parameters 304C may not be supported by the arithmetic circuits in hardware platform 202 (e.g., in GPU(s) 205 or ML circuit 212). In such case, compressed ML model 302C can be decompressed to generate decompressed ML model 302D. In other cases, the precision of compressed parameters 304C may be supported by the arithmetic circuits in hardware platform 202, but compressed ML model 302C can still be decompressed to improve accuracy during training. Further, compressed ML model 302C can be pretrained (and calibrated using training) and having a reduced memory footprint, which can improve inference using the model (e.g., the parameters can be read from memory with improved performance since less bits are used to store the parameters).

Decompressed ML model 302D can include decompressed parameters 304D. Decompression may be an increase in bits of storage. Each decompressed parameter 304D can be stored in memory at a precision that is more than the precision of compressed parameters 304C. In some embodiments, the precision of decompressed parameters 304D may be a precision supported by arithmetic circuits in hardware platform 202. Decompressed parameters 304D can be transient data stored in the memory of client device 14ₖ. That is, client device 14ₖ can allocate space in its memory for decompressed parameters 304D as such parameters are needed during training and can free the space in its memory as decompressed parameters 304D are no longer needed during training.

Client device 14ₖ can perform local training 308 of decompressed ML model 302D. Local training 308 can result in updates to some or all decompressed parameters 304D. An update to a parameter can be a change in value of the parameter.

After local training 308, decompressed ML model 302D can be compressed back to compressed ML model 302C. Note that since local training 308 may have updated some or all decompressed parameters 304D, then some or all compressed parameters 304C may be updated. The decompression, local training, compression process can be repeated over one or more iterations (which can be referred to as rounds of training).

Client device 14ₖ can send compressed parameters 304C to server 16. Server 16 can perform global aggregation 310 of compressed parameters 304C along with compressed parameters from other client devices. Global aggregation 310 can generate aggregated parameters from the sets of compressed parameters. The aggregated parameters can be the parameters of global ML model 20. Server 16 can then send the aggregated parameters, e.g., the parameters of global ML model 20, to update the parameters of local ML model 18ₖ in client device 14ₖ. In some embodiments, server 16 can send the aggregated parameters in uncompressed form to client device 14ₖ. Thus, another instance of ML model 302 can be created and the process described above repeated. In other embodiments, server 16 can send the aggregated parameters in compressed form to client device 14ₖ. The compressed aggregated parameters can be used to directly update compressed ML model 302C.

The quantization and calibration process at the client device can be efficient (e.g., due to compression) and preserve the fidelity of the original pretrained model during calibration (e.g., training at the client device). Other techniques can improve accuracy by manipulations of the training data (rather than model parameters) and the training process. Altering the training process for calibration can impact the local model at the client, which may have been pretrained using an unaltered training process.

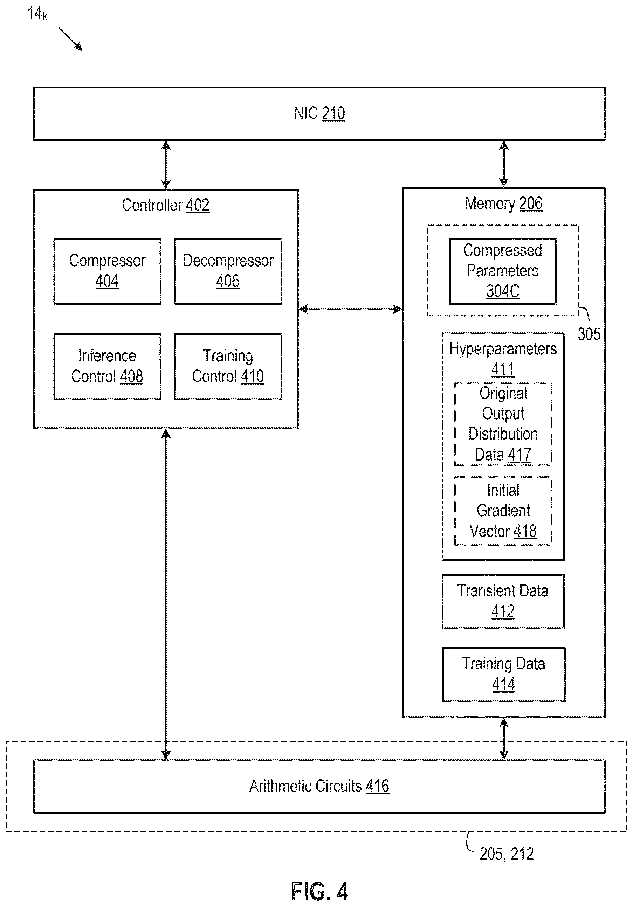

Fig. 4 is a block diagram depicting client device 14ₖ according to some embodiments. Client device 14ₖ can include a controller 402, memory 206, arithmetic circuits 416, and NIC 210. Controller 402 can be coupled to arithmetic circuits 416, memory 206, and NIC 210. Arithmetic circuits 416 can be further coupled to memory 206. NIC 210 can be further coupled to memory 206. Communication and coupling between components can be performed using one or more well-known busses in hardware platform 202 of computer 200. Memory 206 and NIC 210 can be part of hardware platform 202 as discussed above. Controller 402 can be supported by hardware platform 202. A controller can be logic that controls machine learning in a client device. Logic supported by hardware platform 202 may mean that the logic can be hardware (e.g., circuits in hardware platform 202), software (e.g., software executed by circuits in hardware platform 202), or a combination of such hardware and software. Arithmetic circuits 416 can be circuits in hardware platform 202, such as circuits in GPU(s) 205, circuits in ML circuit 212, or both. An arithmetic circuit may be a circuit that performs arithmetic operation(s). An arithmetic operation can be a mathematical operation involving arithmetic (e.g., addition, subtraction, multiplication, division, exponentation, roots, logarithms, trigonometric functions, etc.). Example arithmetic circuits can include shift/rotate circuits, compare circuits, increment/decrement circuits, negation circuits, addition/subtraction circuits, multiplication circuits, division circuits, root circuits, exponentation circuits, logarithmic circuits, trigonometric function circuits, and the like, which are known in the art.

Controller 402 can include a compressor 404 and a decompressor 406. A compressor may be logic that compresses data. Compressor 404 can compress parameters of an ML model. Decompressor may be logic that decompresses data. Decompressor 406 can decompress parameters of an ML model. Controller 402 can include inference control 408 and training control 410. Inference control may be logic that controls inference for an ML model. Inference may be input of data to an ML model to generate predicted outputs. Training control may be logic that controls training for an ML model.

In operation, controller 402 can obtain hyperparameters 411 for local ML model 18ₖ. Hyperparameters may be external parameters of an ML model that do not change during training. That is, for a given round or rounds of training, hyperparameters 411 can be constant. Hyperparameters 411 can include various data, such as the architecture of local ML model 18ₖ (e.g., definition of its algorithms). For example, local ML model 18ₖ can be an artificial neural network (ANN). An ANN may be an ML model that makes decisions similar to the human brain, using processes that mimic neurons. Hyperparameters 411 can include the number of hidden layers of an ANN, the number of activation units in each layer, choice of activation function in each layer, the type of each layer (e.g., fully connected, convolutional, etc.), and the like hyperparameters, each of which is well-known in the art. The architecture of other types of ML models can include hyperparameters that describe its structure. Hyperparameters 411 can also include training parameters, such as choice of optimization algorithm (e.g., gradient descent, stochastic gradient descent, etc.), learning rate of the optimization algorithm, choice of the cost or loss function, number of training batches per round, number of training rounds, and the like hyperparameters, each of which is well-known in the art.

Controller 402 can obtain an ML model (e.g., from server 16) and can invoke compressor 404 to compress the ML model (e.g., ML model 302) to generate and store compressed parameters 304C in memory 206. Compressed parameters 304C can have a footprint 305 in memory 306, which may be the space consumed by compressed parameters 304C in memory 206. Memory 306 can also store transient data 412. Transient data may be data for which space is allocated as the data is needed and then freed when the data is not needed. In some embodiments, controller 402 can receive parameters 304 of ML model 302 in uncompressed form (e.g., from server 16), which are stored as transient data 412. Controller 402 can use compressor 404 to compress parameters 304 and generate compressed parameters 304C. Controller 402 can then reclaim the space in memory 206 that was consumed by parameters 304. In some embodiments, controller 402 can compress parameters 304 to generate compressed parameters 340C on-the-fly as parameters 304 are received. Compressed parameters 304C can consume less space in memory 206 than parameters 304 of ML model 302 (e.g., footprint 305 is less than the footprint of parameters 304).

In some embodiments, compressed parameters 304C have a precision that is unsupported by arithmetic circuits 416. Arithmetic circuits 416 can support inputs having supported precisions(s). For example, an arithmetic circuit 416 can support 8-bit, 16-bit, and/or 32-bit inputs. In such an example, compressed parameters 304C can have precision other than 8, 16, or 32 bits. For example, compressed parameters 304C can have a 4-bit precision. During inference or training, inference control 408 or training control 410 can invoke decompressor 406 to decompress compressed parameters 304C to a supported precision for input to arithmetic circuits 416. Decompression can occur on-the-fly as inference or training is being performed and as compressed parameters 304C are read from memory 206. In other embodiments, compressed parameters 304C can have a precision that is supported by arithmetic circuits 416. However, inference control and/or training control 410 can still invoke decompressor 406 to decompress compressed parameters 304C to a higher precision supported by arithmetic circuits 416 (e.g., for greater accuracy). Controller 402 can store decompressed parameters 304D as transient data 412.

During training, training control 410 can invoke decompressor 406 to decompress compressed parameters 304C for input to arithmetic circuits 416. Training control 410 can obtain training data 414 from memory 206. Controller 402 can obtain training data 414 as described above depending on implementation (e.g., from server 16, locally at the client device, or a combination thereof). Training control 410 can supply training data 414 and decompressed parameters 304D to arithmetic circuits 416 to perform the arithmetic operations and update decompressed parameters 304D. Training control 410 can then compress decompressed parameters 304D after training using compressor 404 and update compressed parameters 304C stored in memory 206.

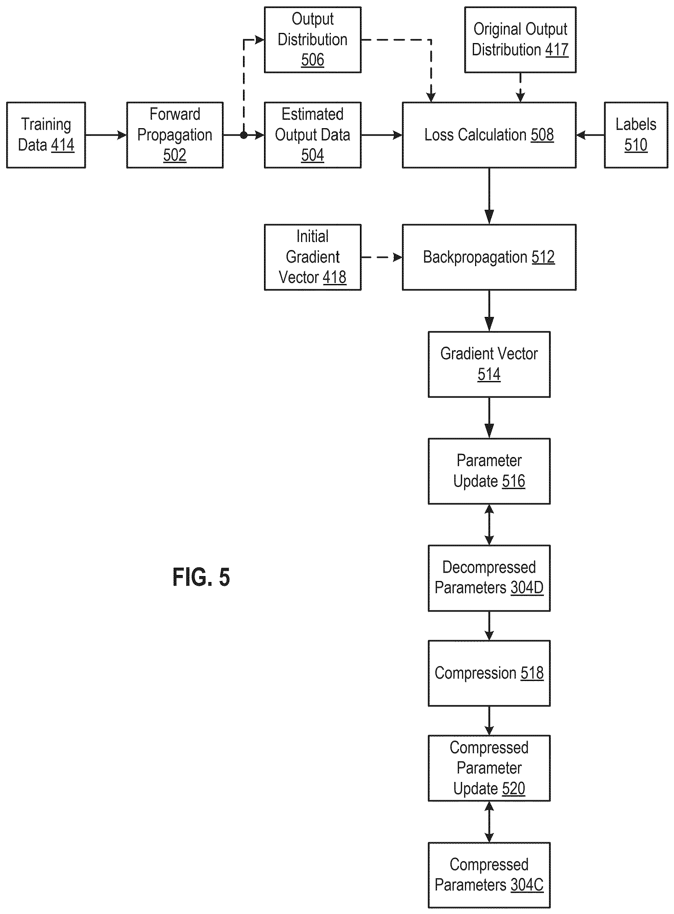

Fig. 5 is a block diagram depicting training of a decompressed ML model and update of a compressed ML model according to some embodiments. In the example, the ML model can be an ANN or the like in which inference involves forward propagation through the ANN and training involves backpropagation through the ANN. Training control 410 can supply training data 414 as input to in a forward propagation process (shown as forward propagation 502). Training control 410 can invoke inference control 408 to perform forward propagation 502. Forward propagation may be a process where input data is passed forward through an ANN to generate estimated outputs. Forward propagation 502 can generate estimated output data 504.

Training control 410 can invoke a loss calculation 508 given estimated output data 504. A loss calculation may be comparison of the estimated outputs with actual target outputs using a loss function. A loss function may be a function that measures the difference between estimated and actual outputs. In some embodiments, loss calculation 508 can compare estimated output data 504 with labels 510 in training data 514 (e.g., the labels indicate actual target outputs).

In another embodiment, loss calculation 508 can compare the output distribution of decompressed ML model 302D with the output distribution of the original model (e.g., ML model 302). Forward propagation 502 can generate output distribution 506 in addition to estimated output data 504. Each estimated output can be paired with a distribution of probabilities across categories. For example, assume estimated outputs can be classified into one of three categories red, green, or blue. A given estimated output can have some probability of being red, some probability of being green, and some probability of being blue. Such an estimated output can be classified into the category with the highest probability. However, the results of forward propagation 502 can also supply the distribution of probabilities associated with the estimated output. Output distribution 506 can include the probability distributions for the estimated outputs in estimated output data. Controller 402 can obtain original output distribution data 417. Original output distribution data 417 can include the probability distributions generated by the original ML model (e.g., ML model 302) given the training data 414. Controller 402 can obtain original output distribution data 417 from server 16. Calculating loss by comparing the output distributions of the decompressed and original ML models can offer better alignment of the decompressed/compressed model to the original model, since the output distribution-based loss provides more feedback information to the training process as compared to label-based loss. This alternative loss calculation can be an improvement when the training is a calibration, since the goal of the calibration can be to fine-tune the compression decisions (e.g., quantization) such that the compressed ML model performs as close as possible to the original ML model.

Training control 410 can invoke a backpropagation process (shown as backpropagation 512). Backpropagation may be a process that computes gradients of the loss function with respect to the parameters. Backpropagation 512 can compute a gradient vector 514 based results of loss calculation 508. Backpropagation can involve propagating the error of the loss function backward through the ANN and applying the chain rule of calculus to compute gradients for each parameter (e.g., collectively gradient vector 514). A vector can be an ordered set of items (e.g., an ordered set of gradients corresponding to the parameters). A gradient may be measurements of the change in parameters with respect to a change in a function of the parameters. In mathematical terms, gradient can be computed with a partial derivative of a function with respect to the parameters. For example, for a function f(θ), where θ represents parameters of a machine learning model, the gradient ∇f(θ) can be a vector including the partial derivatives of the function f with respect to each parameter in θ. The function f can be the loss function.

During backpropagation 512, training control 410 can start the process with an initial gradient (initial gradient vector 418) that is equal to the parameter difference between the original ML model and decompressed ML model 302D. Controller 402 can determine initial gradient vector 418 from the original ML model (e.g., ML model 302) and decompressed ML model 302D. Use of such an initial gradient vector can allow for better training convergence towards the original ML model. Such an initial gradient can offer improved training, which leads to improved performance of compressed model 302C.

Training control 410 can invoke parameter update 516 to update decompressed parameters 304D based on gradient vector 514. A parameter update may be a process that uses an optimization algorithm (e.g., gradient descent) to adjust the parameters iteratively to minimize the loss function. Training control 410 can invoke compression 518 (e.g., using compressor 406) to compress decompressed parameters 304D. Training control 410 can invoke compressed parameter update 520 to update compressed parameters 304C based on the results of compression 518.

The training process illustrated in Fig. 5 can be performed over one or more rounds. Consider that parameters 304 of ML model 302 (the original ML model) can be an M-dimensional vector, where M is the number of parameters. The original parameter vector can represent a first point (O) in an M-dimensional space. After compression, the compressed parameter vector includes parameters that can be quantized. The compressed parameter vector can represent another point (C1) in the M-dimensional space. The point C1 can require less bits to store the parameters than the point O. For example, a large language model (LLM) can include billions of parameters (e.g., GPT-3 from OpenAI can include 175 billion parameters). The memory footprint of 175 billion parameters at a precision of 32 bits can be 700 GB. The 175 billion parameters in the example can be compressed to lower precision, such as 4 bits per parameter. The memory footprint of 175 billion parameters at a precision of 4 bits can be 87.5 GB (e.g., an 87.5% reduction in consumed memory space).

Continuing with the example, decompression can increase the precision of the parameters, but the decompressed parameter vector still represents the point C1. During training, the decompressed parameter vector moves towards the point O. After re-compression and update (e.g., compression of the decompressed ML model and update of the compressed ML model), the compressed parameter vector can represent another point C2 in the M-dimensional space. The point C2 can require the same memory footprint as the vector represent the point C1. However, the point C2 can have less distance from the point O than the point C1 (e.g., less error with respect to the original model). Controller 402 can perform rounds of training to optimize the compressed parameter vector and minimize error with respect to the original parameter vector.

Returning to Fig. 4, controller 402 can send compressed parameters 304C to server 16 through NIC 210 connected to network 10. Sending compressed parameters 304C, as opposed to uncompressed parameters, can conserve resources, such as power consumed by NIC 210 and network bandwidth of NIC 210, network 10, and server 16. Controller 402 can receive aggregated parameters from server 16. Controller 402 can update compressed parameters 304C using aggregated parameters (e.g., which can be in compressed form from server 16 or in uncompressed form from server 16). If aggregated parameters are received in uncompressed form, controller 402 can invoke compressor 404 to compress the aggregated parameters and update compressed parameters 304C. Aggregated parameters in compressed form can be used to directly update compressed parameters 304C.

During training, training control 410 can train the ML model at the client device over training data 414 until some criterion is met. In some embodiments, training control 410 can use batch training, which can be training the ML model over a threshold number of batches of training data 414. In other embodiments, training control 410 can use dynamic training, which can be training the ML model over batches of training data 414 until a threshold percentage of parameters have been updated. A batch of data may be a set of data. Dynamic training can be employed with a decaying stopping criterion to ensure convergence of the training process (e.g., there can be some criterion that stops dynamic training even if the threshold percentage of parameters have not been updated).

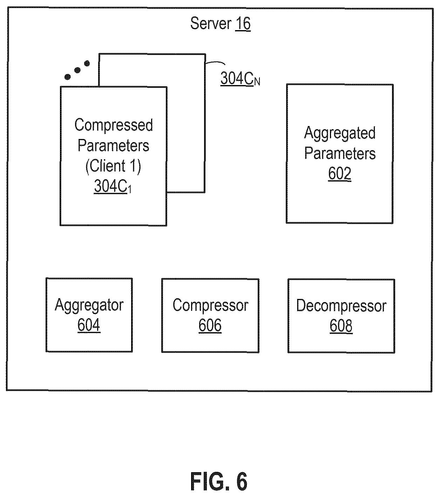

Fig. 6 is a block diagram depicting server 16 according to some embodiments. Server 16 can include an aggregator 604, a compressor 606, and a decompressor 608. Server 16 can be implemented using computer 200 and aggregator 605, compressor 606, and decompressor 608 can be supported by hardware platform 202 of such computer 200. Server 16 can receive sets of compressed parameters 304C₁...304C_{N} from client devices 14ₗ...14_{N}, respectively. Aggregator 604 can aggregate compressed parameters 304Cₗ...304C_{N} to generate aggregated parameters 602. Aggregator 604 can decompress the compressed parameters prior to aggregation. Server 16 can send aggregated parameters 602 to clients 14₁...14_{N}. In some embodiments, server 16 can send aggregated parameters 602 in uncompressed form (e.g., at a precision higher than the compressed precision used in the client devices). In other embodiments, server 16 can invoke compressor 606 to compress aggregated parameters 602 and send aggregated parameters 602 to client devices 14₁...14_{N} in compressed form.

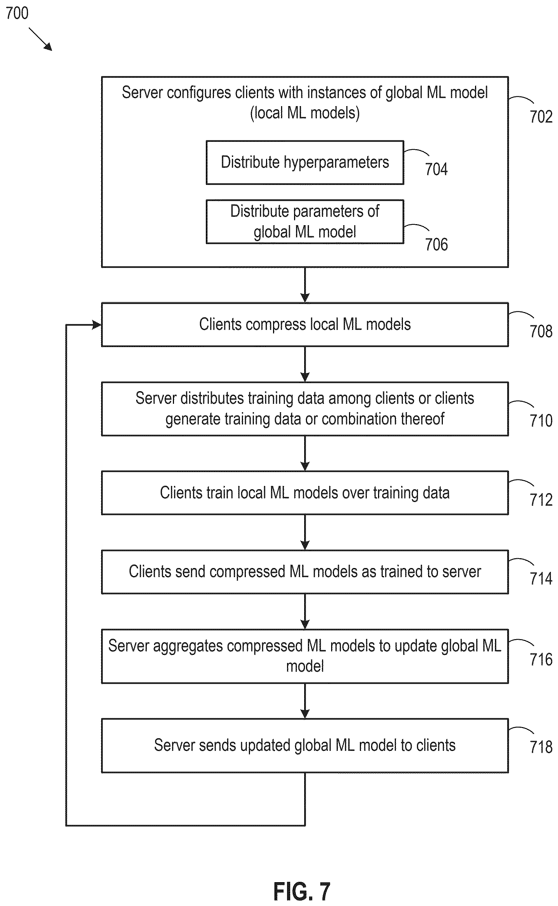

Fig. 7 is a flow diagram depicting a method 700 of training an ML model in a distributed learning environment according to some embodiments. Method 700 can begin at step 702, where server 16 can configure clients 14₁...14_{N} with instances of global ML model 20 (e.g., local ML models 18₁...18_{N}). For example, at step 704, server 16 can distribute hyperparameters to client devices 14₁...14_{N}. At step 706, server 16 can distribute parameters of global ML model 20. At step 708, clients 14₁...14_{N} can compress local ML models 18₁...18_{N}, respectively. At step 710, server 16 can distribute training data among clients 14₁...14_{N} (e.g., either the same training data to all clients or different sets of training data to different clients). Alternatively, clients 14₁...14_{N} can generate training data locally (e.g., in a federated learning environment. In another alternative, clients can receive training data from the server and can generate training data locally.

At step 712, clients 14₁...14_{N} can train local ML models 18₁...18_{N} over the training data, respectively. At step 714, clients 14₁...14_{N} can send compressed ML models as trained to server 16. At step 716, server 16 can aggregate the compressed ML models to update global ML model 20. At step 718, server 16 can send global ML model 20 as updated to clients 14₁...14_{N}. Method 700 can return to step 708 and repeat for additional rounds of training. In some embodiments, server 16 can compress the updated global ML model prior to transmission to the client devices. In such a case, the clients do not have to perform compression of the updated global ML model at step 708.

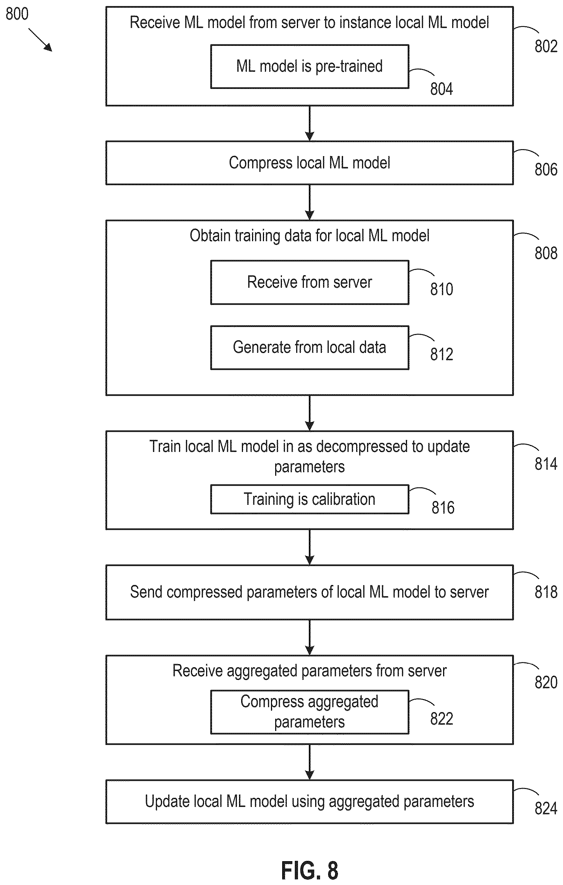

Fig. 8 is a flow diagram depicting a method 800 of training a local ML model at a client device according to some embodiments. Method 800 can begin at step 802, where a client device 14ₖ can receive an ML model from server 14 to instance local ML model 18ₖ. In some embodiments, the ML model received from server 14 can be pre-trained (804). For example, the training performed by client device 14ₖ can be calibration of a pre-trained ML model.

At step 806, client device 14ₖ can compress local ML model 14ₖ. That is, client device 14ₖ can compress the parameters of the ML model received from server 16 and store the compressed parameters in its memory. At step 808, client device 14ₖ can obtain training data for training local ML model 18ₖ. For example, client device 14ₖ can receive training data from server 16 (step 810). Alternatively, client device 14ₖ can generate training data locally (step 812). In another alternative, client device 14ₖ can receive training data from server 16 and generate training data locally (both steps 810, 812).

At step 814, client device 14ₖ can train local ML model 18ₖ in decompressed form to update its parameters. In some embodiments, the training can be a calibration of local ML model 18ₖ (step 816). At step 818, client device 14ₖ can send compressed parameters of local ML model 18ₖ to server 16. At step 820, client device 14ₖ can receive aggregated parameters from server 16. If the aggregated parameters are in uncompressed form, client device 14ₖ can compress the aggregated parameters (step 822). At step 824, client device 14ₖ can update local ML model 18ₖ, e.g., the compressed parameters stored in its memory, using the aggregated parameters from server 16. Client device 14ₖ can repeat steps 808-824 for additional training (e.g., additional calibration).

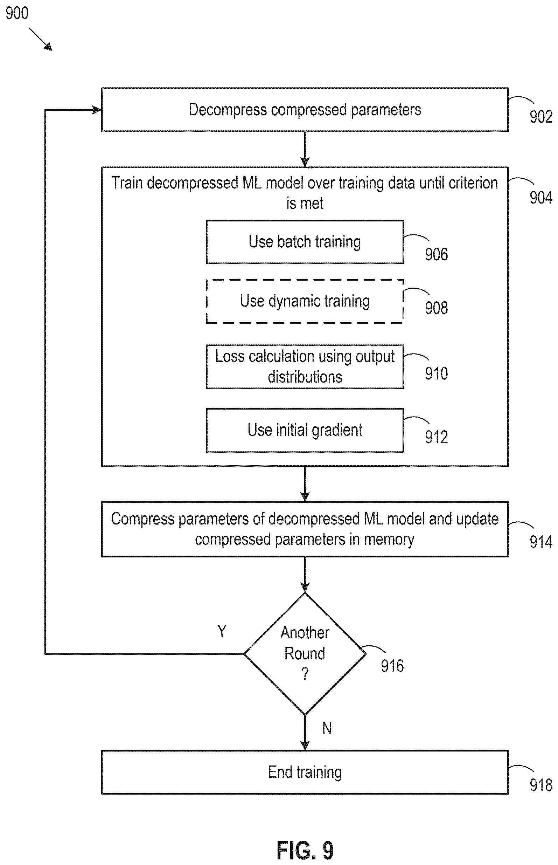

Fig. 9 is a flow diagram depicting a method 900 of training a compressed ML model at a client device according to some embodiments. Method 900 can begin at step 902, where client device 14ₖ can decompress the compressed parameters stored in its memory. At step 904, client device 14ₖ can train a decompressed ML model (e.g., local ML model 18ₖ as decompressed) over training data until a criterion is met. For example, at step 906, client device 14ₖ can use batch training to train the decompressed ML model over some threshold number of batches. Alternatively, at step 906, client device 14ₖ can use dynamic training to train the decompressed ML model over batches until some threshold number of parameters have changed. At step 910, during training, client device 14ₖ can invoke a loss calculation that uses output distributions, as discussed above. Alternatively, client device 14ₖ can use labels in the training data for the loss calculation (not explicitly shown in method 900). At step 912, client device 14ₖ can use an initial gradient as discussed above to initialize backpropagation.

At step 914, client device 14ₖ can compress the parameters of the decompressed ML model and update the compressed parameters as stored in its memory. At step 916, client device 14ₖ can determine if another round of training should be performed. Rounds of training can be performed until some criterion is met (e.g., some threshold number of training rounds or training over training data set some threshold number of times). If there is another round, method 900 proceeds to step 902 and repeats. Otherwise, method 900 proceeds to step 918 and can end the training.

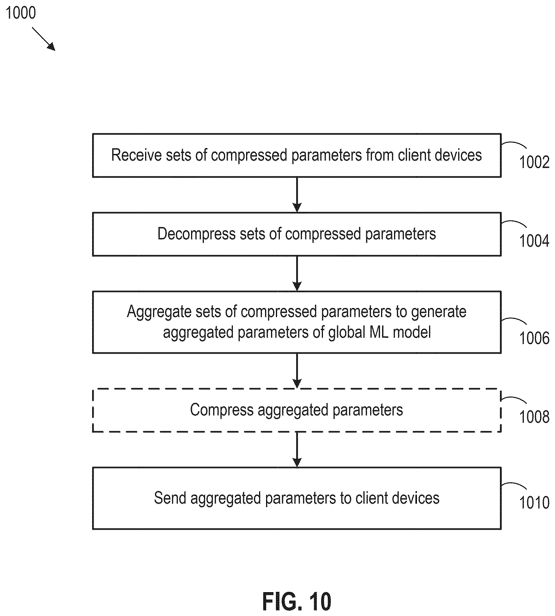

Fig. 10 is a flow diagram depicting a method 1000 of updating a global ML model at a server according to some embodiments. Method 1000 can begin at step 1002, where server 16 can receive sets of compressed parameters from client devices 14ₗ...14_{N}. At step 1004, server 16 can decompress the compressed parameters. At step 1006, server 16 can aggregate the sets of compressed parameters to generate aggregated parameters of global ML model 20. At optional step 1008, server 16 can compress the aggregated parameters. At step 1010, server 16 can send the aggregated parameters to client devices 14₁...14_{N}.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

One or more embodiments of the present invention may be implemented as one or more computer programs or as one or more computer program modules embodied in computer readable media. The term computer readable medium refers to any data storage device that can store data which can thereafter be input to a computer system. Computer readable media may be based on any existing or subsequently developed technology that embodies computer programs in a manner that enables a computer to read the programs. Examples of computer readable media are hard drives, NAS systems, read-only memory (ROM), RAM, compact disks (CDs), digital versatile disks (DVDs), magnetic tapes, and other optical and non-optical data storage devices. A computer readable medium can also be distributed over a network-coupled computer system so that the computer readable code is stored and executed in a distributed fashion.

As used herein, the phrase "at least one of" preceding a series of items, with the term "and" or "or" to separate any of the items, modifies the list as a whole rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

As used herein, the term "couple" and its derivatives include: (a) electrical and communicative coupling; and (b) do not imply a direct connection, but rather may include intervening elements, unless described as "directly coupled."

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

The invention further comprises the following embodiments forming part of the description:
1. An apparatus, comprising:
   a hardware platform having arithmetic circuits and a memory, the memory configured to store, at a first precision, first compressed parameters of a machine learning (ML) model, the arithmetic circuits configured to process input at a second precision;
   a network interface controller; and
   a controller, supported by the hardware platform, configured to: decompress, from the memory through an increase in precision to the second precision, the first compressed parameters to obtain decompressed parameters; control the arithmetic circuits to train, using arithmetic operations on the decompressed parameters, the ML model and update the decompressed parameters; compress, using quantization and reduction in precision to the first precision, the decompressed parameters as updated to obtain second compressed parameters; send, using the network interface controller, the second compressed parameters over a network to a server; and update the first compressed parameters in the memory in response to data received, through the network interface controller, from the server over the network.
2. The apparatus of embodiment 1, wherein the controller is configured to train the ML model over a dataset in batches until a criterion is met, the criterion being a threshold number of the batches.
3. The apparatus of embodiment 1, wherein the controller is configured to train the ML model over a dataset in batches until a criterion is met, the criterion being a threshold percentage of the decompressed parameters being updated.
4. The apparatus of embodiment 1, wherein the controller is configured to train the ML model using a loss calculation where loss is calculated between a first output distribution of the ML model with the decompressed parameters and a second output distribution of the ML model with the first compressed parameters.
5. The apparatus of embodiment 1, wherein the controller is configured to train the ML model with an initial gradient being a difference between the first compressed parameters and the decompressed parameters before update.
6. The apparatus of embodiment 1, wherein the data comprises parameters of the ML model in compressed form, and wherein the controller is configured to replace the first compressed parameters in the memory with the parameters.
7. The apparatus of embodiment 1, wherein that data comprises parameters of the ML mode in uncompressed form, and wherein the controller is configured to compress the parameters and replace the first compressed parameters in memory with the parameters as compressed.
8. A method of calibrating a machine learning (ML) model, comprising:
   decompressing, from a memory of a hardware platform in a client device, through an increase in precision to a second precision, first compressed parameters of the ML model to obtained decompressed parameters;
   controlling arithmetic circuits of the hardware platform to train, using arithmetic operations on the decompressed parameters, the ML model and update the decompressed parameters, the arithmetic circuits configured to process input at the second precision;
   compressing, using quantization and reduction in precision to a first precision, the decompressed parameters as updated to obtain second compressed parameters;
   sending, using a network interface controller of the client device, the second compressed parameters to a server over a network; and
   updating the first compressed parameters in the memory in response to data received, through the network interface controller, from the server over the network.
9. The method of embodiment 8, wherein the step of controlling comprises:
   training the ML model over a dataset in batches until a criterion is met, the criterion being a threshold number of the batches.
10. The method of embodiment 8, wherein the step of controlling comprises:
   training the ML model over a dataset in batches until a criterion is met, the criterion being a threshold percentage of the decompressed parameters being updated.
11. The method of embodiment 8, wherein the step of controlling comprises:
   training the ML model using a loss calculation where loss is calculated between a first output distribution of the ML model with the decompressed parameters and a second output distribution of the ML model with the first compressed parameters.
12. The method of embodiment 8, wherein the step of controlling comprises:
   training the ML model with an initial gradient being a difference between the first compressed parameters and the decompressed parameters before update.
13. The method of embodiment 8, wherein the data comprises parameters of the ML model in compressed form, and wherein the method further comprises:
   receiving, at the server, compressed parameters of the ML model from another client device over the network;
   decompressing, at the server, the second compressed parameters from the client device and the compressed parameters from the other client device;
   generating, at the server, aggregated parameters of the ML model from the second compressed parameters and the compressed parameters;
   compressing, at the server, the aggregated parameters; and
   sending the aggregated parameters to the client device as the data.
14. The method of embodiment 8, wherein that data comprises parameters of the ML mode in uncompressed form, and wherein the method further comprises:
   receiving, at the server, compressed parameters of the ML model from another client device over the network;
   decompressing, at the server, the second compressed parameters from the client device and the compressed parameters from the other client device;
   generating, at the server, aggregated parameters of the ML model from the second compressed parameters and the compressed parameters; and
   sending the aggregated parameters to the client device as the data.
15. The method of embodiment 14, further comprising:
   compressing, by the client device, the aggregated parameters; and
   replacing the first compressed parameters in memory with the aggregated parameters as compressed.
16. A distributed learning apparatus, comprising:
   a client device;
   a server coupled to the client device through a network;
   the client device comprising:
      a hardware platform having arithmetic circuits and a memory, the memory configured to store, at a first precision, first compressed parameters of a machine learning (ML) model, the arithmetic circuits configured to process input at a second precision;
      a network interface controller; and
      a controller, supported by the hardware platform, configured to: decompress, from the memory through an increase in precision to the second precision, the first compressed parameters to obtain decompressed parameters; control the arithmetic circuits to train, using arithmetic operations on the decompressed parameters, the ML model and update the decompressed parameters; compress, using quantization and reduction in precision to the first precision, the decompressed parameters as updated to obtain second compressed parameters; send, using the network interface controller, the second compressed parameters over the network to the server; and update the first compressed parameters in the memory in response to data received, through the network interface controller, from the server over the network.
17. The distributed learning apparatus of embodiment 16, wherein the controller is configured to train the ML model over a dataset in batches until a criterion is met, the criterion being a threshold number of the batches.
18. The distributed learning apparatus of embodiment 16, wherein the controller is configured to train the ML model over a dataset in batches until a criterion is met, the criterion being a threshold percentage of the decompressed parameters being updated.
19. The distributed learning apparatus of embodiment 16, wherein the controller is configured to train the ML model using a loss calculation where loss is calculated between a first output distribution of the ML model with the decompressed parameters and a second output distribution of the ML model with the first compressed parameters.
20. The distributed learning apparatus of embodiment 16, wherein the controller is configured to train the ML model with an initial gradient being a difference between the first compressed parameters and the decompressed parameters before update.

## Claims

1. An apparatus, comprising:
a hardware platform having arithmetic circuits and a memory, the memory configured to store, at a first precision, first compressed parameters of a machine learning (ML) model, the arithmetic circuits configured to process input at a second precision;
a network interface controller; and
a controller, supported by the hardware platform, configured to: decompress, from the memory through an increase in precision to the second precision, the first compressed parameters to obtain decompressed parameters; control the arithmetic circuits to train, using arithmetic operations on the decompressed parameters, the ML model and update the decompressed parameters; compress, using quantization and reduction in precision to the first precision, the decompressed parameters as updated to obtain second compressed parameters; send, using the network interface controller, the second compressed parameters over a network to a server; and update the first compressed parameters in the memory in response to data received, through the network interface controller, from the server over the network.

2. The apparatus of claim 1, wherein the controller is configured to train the ML model over a dataset in batches until a criterion is met, the criterion being a threshold number of the batches.

3. The apparatus according to at least one of the preceding claims, wherein the controller is configured to train the ML model over a dataset in batches until a criterion is met, the criterion being a threshold percentage of the decompressed parameters being updated.

4. The apparatus according to at least one of the preceding claims, wherein the controller is configured to train the ML model using a loss calculation where loss is calculated between a first output distribution of the ML model with the decompressed parameters and a second output distribution of the ML model with the first compressed parameters.

5. The apparatus according to at least one of the preceding claims, wherein the controller is configured to train the ML model with an initial gradient being a difference between the first compressed parameters and the decompressed parameters before update.

6. The apparatus according to at least one of the preceding claims, wherein the data comprises parameters of the ML model in compressed form, and wherein the controller is configured to replace the first compressed parameters in the memory with the parameters.

7. The apparatus according to at least one of the preceding claims, wherein that data comprises parameters of the ML mode in uncompressed form, and wherein the controller is configured to compress the parameters and replace the first compressed parameters in memory with the parameters as compressed.

8. A method of calibrating a machine learning (ML) model, comprising:
decompressing, from a memory of a hardware platform in a client device, through an increase in precision to a second precision, first compressed parameters of the ML model to obtained decompressed parameters;
controlling arithmetic circuits of the hardware platform to train, using arithmetic operations on the decompressed parameters, the ML model and update the decompressed parameters, the arithmetic circuits configured to process input at the second precision;
compressing, using quantization and reduction in precision to a first precision, the decompressed parameters as updated to obtain second compressed parameters;
sending, using a network interface controller of the client device, the second compressed parameters to a server over a network; and
updating the first compressed parameters in the memory in response to data received, through the network interface controller, from the server over the network.

9. The method of claim 8, wherein the step of controlling comprises:
training the ML model over a dataset in batches until a criterion is met, the criterion being a threshold number of the batches.

10. The method according to at least one of claims 8 or 9, wherein the step of controlling comprises:
training the ML model over a dataset in batches until a criterion is met, the criterion being a threshold percentage of the decompressed parameters being updated,
and/or
wherein the step of controlling comprises:
training the ML model using a loss calculation where loss is calculated between a first output distribution of the ML model with the decompressed parameters and a second output distribution of the ML model with the first compressed parameters,
and/or
wherein the step of controlling comprises:
training the ML model with an initial gradient being a difference between the first compressed parameters and the decompressed parameters before update.

11. The method according to at least one of claims 8 to 10, wherein the data comprises parameters of the ML model in compressed form, and wherein the method further comprises:
receiving, at the server, compressed parameters of the ML model from another client device over the network;
decompressing, at the server, the second compressed parameters from the client device and the compressed parameters from the other client device;
generating, at the server, aggregated parameters of the ML model from the second compressed parameters and the compressed parameters;
compressing, at the server, the aggregated parameters; and
sending the aggregated parameters to the client device as the data.

12. The method according to at least one of claims 8 to 11, wherein that data comprises parameters of the ML mode in uncompressed form, and wherein the method further comprises:
receiving, at the server, compressed parameters of the ML model from another client device over the network;
decompressing, at the server, the second compressed parameters from the client device and the compressed parameters from the other client device;
generating, at the server, aggregated parameters of the ML model from the second compressed parameters and the compressed parameters; and
sending the aggregated parameters to the client device as the data.

13. The method of claim 12, further comprising:
compressing, by the client device, the aggregated parameters; and
replacing the first compressed parameters in memory with the aggregated parameters as compressed.

14. A distributed learning apparatus, comprising:
a client device;
a server coupled to the client device through a network;
the client device comprising:
a hardware platform having arithmetic circuits and a memory, the memory configured to store, at a first precision, first compressed parameters of a machine learning (ML) model, the arithmetic circuits configured to process input at a second precision;
a network interface controller; and
a controller, supported by the hardware platform, configured to: decompress, from the memory through an increase in precision to the second precision, the first compressed parameters to obtain decompressed parameters; control the arithmetic circuits to train, using arithmetic operations on the decompressed parameters, the ML model and update the decompressed parameters; compress, using quantization and reduction in precision to the first precision, the decompressed parameters as updated to obtain second compressed parameters; send, using the network interface controller, the second compressed parameters over the network to the server; and update the first compressed parameters in the memory in response to data received, through the network interface controller, from the server over the network.

15. The distributed learning apparatus of claim 14, wherein the controller is configured to train the ML model over a dataset in batches until a criterion is met, the criterion being a threshold number of the batches,
and/or
wherein the controller is configured to train the ML model over a dataset in batches until a criterion is met, the criterion being a threshold percentage of the decompressed parameters being updated,
and/or
wherein the controller is configured to train the ML model using a loss calculation where loss is calculated between a first output distribution of the ML model with the decompressed parameters and a second output distribution of the ML model with the first compressed parameters,
and/or
wherein the controller is configured to train the ML model with an initial gradient being a difference between the first compressed parameters and the decompressed parameters before update.
